# FASCICULE DE BREVET EUROPEEN

(11) **EP 2 826 045 B1**
(45) Date de publication et mention de la délivrance du brevet: **18.05.2016**
(21) Numéro de dépôt: 13709474.4
(22) Date de dépôt: 18.03.2013
(51) Int. Cl.: H01F 1/01

(54) **PROCÉDÉ DE FABRICATION D'UN ÉLÉMENT MAGNÉTOCALORIQUE**
VERFAHREN ZUR HERSTELLUNG EINES MAGNETOKALORISCHEN BAUTEILS
PROCESS TO OBTAIN A MAGNETOCALORIC ELEMENT

(30) Priorité: 16.03.2012 FR 1252387
(43) Date de publication de la demande: 21.01.2015
(73) Titulaire: Erasteel, 75015 Paris (FR)
(72) Inventeur: DUBREZ, Alexandra, F-Ciboure (FR); VIKNER, Peter, F-75015 Paris (FR); MAYER, Charlotte, F-75012 Paris (FR); PIERRONNET, Michel, F-58000 Sermoise sur Loire (FR)
(74) Mandataire: Blot, Philippe Robert Emile
(86) Numéro de dépôt international: PCT/EP2013/055558
(87) Numéro de publication internationale: WO 2013/135908

(56) Documents cités:
- EP-A2- 0 411 591
- DE-A1-102006 046 041
- US-A1- 2006 231 163

## Description

L'invention concerne les matériaux magnétocaloriques, et plus particulièrement ceux qui peuvent être utilisés comme réfrigérants magnétiques, à des températures de -30 à +50°C environ, donc entourant la température ambiante, sous l'action de champs magnétiques modérés produits par des aimants permanents.

Aujourd'hui, une grande partie de la consommation mondiale d'énergie est consacrée à la réfrigération et aux installations d'air conditionné (25% du marché de l'électricité domestique aux Etats-Unis). La réfrigération magnétique est l'une des techniques nouvelles qui visent à se substituer aux techniques classiques de production de froid par compression de gaz, car elles ont l'avantage de ne pas utiliser de CFC ou de HCFC et d'avoir un meilleur rendement énergétique (de l'ordre de 30% supérieur). Elle consiste à utiliser un type particulier de matériau magnétique, dit magnétocalorique, qui présente une variation de température lorsqu'il est soumis à l'action d'un champ magnétique externe. Une différence de température de large amplitude est alors obtenue dans l'environnement du matériau lorsque le matériau subit des cycles d'aimantations/désaimantations successives.

Cet effet magnétocalorique s'observe, notamment, pour les matériaux ferromagnétiques, au voisinage de leur température de Curie T_{C}. Le Gd est le matériau magnétocalorique de référence pouvant être utilisé pour des applications de réfrigération autour de la température ambiante, sa variation d'entropie magnétique isotherme ΔSₘ étant de -10 J/kg K et sa variation de température adiabatique ΔT_{ad} étant de 12 K dans un champ magnétique de 5 T. L'effet magnétocalorique a été particulièrement étudié dans des alliages à base de terres rares et/ou de métaux de transition, du fait de leur ferromagnétisme et de leurs densités de moments magnétiques élevées. Parmi eux, les alliages La(Fe₁₋ₓSiₓ)₁₃ s'avèrent être particulièrement intéressants, car ils présentent des propriétés magnétocaloriques élevées et un coût de matières premières moindre que celui des alliages à base de Gd. De plus le Gd est un matériau relativement rare.

Les alliages La(Fe₁₋ₓSiₓ)₁₃ ont une structure du type NaZn₁₃. Leur T_{C} peut être modifiée par l'introduction d'un autre métal de transition se substituant partiellement au Fe, tel que Co pour l'augmenter et Mn pour la diminuer. Ceci va également avoir pour conséquences:
- la dégradation des propriétés magnétocaloriques (défavorable à l'application considérée) ;
- et la diminution de l'hystérésis thermique du matériau (favorable à l'application considérée).

On peut aussi ajuster les propriétés magnétostrictives et la T_{C} du matériau en insérant des éléments tels que H, C, N ou B dans la maille cristallographique de groupe d'espace Fm-3c. Cette insertion a pour effet d'augmenter T_{C} en augmentant le paramètre de maille a et les distances Fe-Fe. Les propriétés magnétocaloriques sont, elles, diminuées, mais dans une moindre mesure que par la substitution du Fe. On peut aussi ajuster T_{C} en substituant une autre terre rare au La, principalement Ce et Pr qui diminuent le paramètre de maille a et, donc, T_{C}, mais maintiennent, voire augmentent, les propriétés magnétocaloriques.

La synthèse de ces matériaux est classiquement réalisée par la fusion et la solidification d'un mélange stoechiométrique de leurs composants, suivie par une étape prolongée de recuit à 900-1200°C pour faire disparaître les phases secondaires et obtenir la structure NaZn₁₃ visée. De façon optimale, un procédé de solidification rapide doit être mis en oeuvre, afin d'éviter une ségrégation des phases trop importante qui conduirait à des durées de recuit excessives pour la productivité du procédé.

Cette solidification rapide peut être réalisée en projetant l'alliage liquide sur une surface refroidie en rotation, pour obtenir, par exemple, un ruban d'alliage qui est ensuite broyé pour former une poudre. Le document US-B-7 186 303, par exemple, décrit un tel procédé.

Un autre procédé de solidification rapide consiste à atomiser un jet d'alliage liquide sortant d'un répartiteur en projetant sur lui un gaz à grande vitesse. On obtient ainsi directement une poudre dont les particules ont un diamètre moyen de 10 à 100 µm environ, et qui est directement utilisable pour les étapes ultérieures de fabrication du matériau. Le document EP-A-1 867 744 cite un tel procédé.

Le document US-A-2010/0047527 décrit une méthode d'obtention de composants magnétocaloriques par frittage réactif. Le frittage réactif consiste à mettre en forme et à fritter un mélange de poudres de compositions différentes (appelées précurseurs). Le document décrit également le procédé d'obtention des précurseurs. Les précurseurs primaires FeLa et LaY sont préparés à partir d'un état massif obtenu, par exemple, par coulée de rubans métalliques sur une roue, puis broyés pour obtenir des poudres fines et de distribution homogène. Après cela, il est utile que l'un des précurseurs soit hydruré pour faciliter le broyage et réduire la quantité d'éléments indésirables dans les précurseurs. Les deux poudres de précurseurs, dont préférentiellement l'une est hydrurée, sont alors mélangées et broyées à nouveau pour obtenir un mélange homogène (précurseur secondaire) avec une taille de grains de poudre inférieure à 10 microns (2,7 microns dans l'exemple décrit).

L'atomisation au gaz permet de s'affranchir de toutes ces étapes et d'obtenir directement une poudre précurseur unique, dont on contrôle très bien la composition. La poudre peut être frittée ou activée et/ou hydrogénée pour obtenir un matériau magnétocalorique.

Un autre document JP-A-2007 031831 décrit une méthode d'obtention de poudre magnétocalorique par broyage d'oxydes. Des poudres d'oxydes de terres rares, de Si et de Fe sont mélangées avec un agent réducteur et un accélérateur de désagrégation, et chauffées sous atmosphère inerte entre 1000 et 1250°C pendant un temps assez long pour assurer la réduction et la diffusion atomique. La poudre est ensuite refroidie et traitée sous hydrogène entre 100 et 500°C. Enfin, elle est plongée dans l'eau pour séparer les agents réducteurs et désagrégeants de la poudre. Cette méthode est nettement plus lourde à mettre en oeuvre que l'atomisation suivie d'un recuit, et ne permet pas d'obtenir des quantités de poudres similaires.

Le principal inconvénient des procédés connus est, cependant, le besoin de réaliser un frittage de la poudre pour la mettre sous forme d'un élément magnétocalorique. On expose ainsi le matériau à un risque d'oxydation, on ne peut pas aisément réaliser d'éléments de formes complexes, et les températures de frittage vont induire la désinsertion des éléments (H ou N) préalablement insérés dans la poudre.

Le but de l'invention est de proposer un procédé de fabrication de matériau magnétocalorique composite qui procure, à un coût compétitif et d'une manière applicable industriellement, des matériaux magnétocaloriques de structure de type NaZn₁₃ à hautes performances, présentant une gamme de T_{C} situées entre -30 et +50°C et des propriétés magnétocaloriques élevées, avec un faible hystérésis thermique, une bonne facilité de mise en forme et l'absence de nécessité de pratiquer un frittage lors de cette mise en forme.

A cet effet, l'invention a pour objet un procédé de fabrication d'un élément magnétocalorique, caractérisé en ce qu'il comporte les étapes suivantes :
- on prépare au moins une poudre d'un alliage magnétocalorique de composition :

   La₁₋ₓ(Ce, Pr)ₓ((Fe_{1-z-v}Mn_{z}Coᵥ)_{1-y}Si_{y})_{w}Xₙ

   dans lequel :
   - X est un ou plusieurs éléments choisis parmi H, C, N et B ;
   - x = 0 à 0,5, de préférence 0,25 à 0,5 ;
   - y = 0,05 à 0,2 ;
   - z = 0 à 0,15 ;
   - v = 0 à 0,15 ;
   - w=12à1;
   - n = 0 à 3,5, de préférence 1 à 3,5 ;
le reste étant des impuretés résultant de l'élaboration, avec une teneur maximale de 4% en poids, de préférence au plus 2%, en terres rares autres que La, Ce et Pr, et une teneur maximale de 2% en poids pour les autres impuretés, la préparation de la poudre comportant elle-même les étapes suivantes :
- on élabore un alliage liquide dans un creuset ;
- on solidifie ledit alliage liquide sous forme de poudre de particules sensiblement sphériques de diamètre moyen compris entre 10 et 100 µm par atomisation d'un jet dudit alliage liquide au moyen d'un gaz inerte ;
- optionnellement, on traite thermiquement ladite poudre à une température comprise entre 100 et 500°C pendant au moins 1 min dans une atmosphère non oxydante, pour éliminer les composés adsorbés par la poudre ;
- on traite thermiquement ladite poudre pour lui conférer à au moins 70% en poids une phase de structure de type NaZn₁₃ par chauffage sous atmosphère inerte ou réductrice ou sous vide jusqu'à une température de 900 à 1200°C, de préférence de 1000 à 1200°C ;
- optionnellement on réalise un traitement d'hydruration et/ou de nitruration et/ou de carburation et/ou carbonitruration pour conférer à n sa valeur définitive ;
- on disperse ladite poudre dans une matrice constituée par un ou plusieurs liants organiques pour former un mélange comportant de 40 à 80% en volume de poudre ;
- on met en forme ledit mélange ;
- et éventuellement on réalise une solidification de la matrice.

Le traitement thermique de la poudre lui conférant une structure du type NaZn₁₃ peut comporter une étape de chauffage de la poudre à une vitesse de 1 à 200°C/min jusqu'à la température de traitement.

La solidification de la matrice peut s'effectuer par chauffage entre 20 et 300°C et/ou par projection de rayons UV.

Avant la mise en forme, le mélange formé par la poudre et les liants peut être broyé ou mis en granules.

On peut mélanger à la matrice au moins deux poudres différentes, dont les températures de Curie la plus haute et la plus basse diffèrent de 80°C au maximum.

Le liant peut comporter au moins un polymère choisi parmi le polyéthylène, l'éthylène vinyle acétate, le polypropylène, le polystyrène, un polycarbonate, des résines époxy, des résines de polyuréthane.

La mise en forme du mélange peut être réalisée par transformation sous une pression de 1,5 à 3000 MPa à une température de 20 à 300°C, par exemple :

La mise en forme du mélange peut être réalisée par compression dans un moule.

La mise en forme du mélange peut être réalisée par injection dans un moule.

La mise en forme du mélange peut être réalisée par extrusion.

Comme on l'aura compris, l'invention repose sur l'association de plusieurs caractéristiques liées au procédé de fabrication proprement dit du matériau et à sa composition.

En premier lieu, c'est la solidification rapide par atomisation au gaz qui est choisie de façon exclusive pour fabriquer la poudre à partir de laquelle le matériau magnétocalorique sera obtenu.

Cette poudre subit ensuite un recuit entre 900 et 1200 °C, de préférence entre 1000°C et 1200°C, sous une atmosphère inerte afin de former la phase magnétocalorique de type NaZn₁₃ en proportions optimales, c'est-à-dire d'au moins 70% en poids. Des traitements thermiques successifs sous une atmosphère contenant de l'hydrogène ou de l'azote ou sous une atmosphère carbonée sont pratiqués, si l'on souhaite insérer un ou plusieurs des éléments H, N et C dans la phase de type NaZn₁₃.

Et enfin, la mise en forme du matériau magnétocalorique a lieu, par exemple par transformation sous une pression de 1,5 à 3000 MPa à une température de 20 à 300°C d'un mélange de ladite poudre métallique et de composants organiques agissant comme liants pour les particules de ladite poudre. A cet effet on peut utiliser notamment un moulage sous pression, une injection dans un moule, ou une extrusion. D'autres procédés de mise en forme fonctionnellement équivalents peuvent être envisagés.

Le matériau intègre de préférence une quantité relativement élevée de Ce se substituant partiellement au La. Le Ce représente de préférence entre 25 et 50% du pourcentage atomique de terres rares. De cette façon, on peut réduire le coût de fabrication, le mélange La-Ce utilisable à cet effet étant sensiblement moins coûteux que le La seul, qui est un produit ultime d'une séparation des matériaux renfermant des terres rares (mischmétal). Les propriétés magnétocaloriques sont aussi améliorées par cette introduction de Ce, mais au prix d'un abaissement de T_{C} que l'on peut compenser par d'autres ajustements de la composition du matériau.

Le Pr peut aussi être utilisé en plus ou à la place du Ce en tant que substituant du La, et dans des proportions similaires, avec l'inconvénient d'un coût normalement plus élevé que le Ce.

La substitution de La par d'autres terres rares que Ce et Pr serait en principe possible. Toutefois, au-delà de Pr dans le tableau périodique, les lanthanides présentent un rayon atomique trop notablement plus faible que La. Ceci va limiter la possibilité de substitution par ces atomes dans la structure NaZn₁₃ et entraîner la formation d'autres phases que celles du type NaZn₁₃. C'est la raison pour laquelle la teneur en terres rares autres que La, ce et Pr ne doit pas dépasser 4%, de préférence ne doit pas dépasser 2%.

Pour augmenter T_{C}, le matériau peut subir une hydruration aussi poussée que possible, de préférence totale, pour décaler sa T_{C} vers l'ambiante. D'autres éléments sur ce point fonctionnellement équivalents à H (à savoir C, N, B) peuvent s'ajouter à lui ou le remplacer dans ce but.

T_{C} peut aussi être complémentairement ajustée par la substitution partielle de Mn et/ou Co à Fe. La substitution de Fe par Mn diminue T_{C} alors que celle par Co l'augmente.

Une faible proportion de ferrite α-Fe(Si) (ou Fe(Co,Si), ou Fe(Mn,Si)) est inévitablement présente dans la poudre activée constituant le matériau. La présence de cette phase doit, cependant, être limitée autant que possible, afin d'obtenir une proportion maximale de la phase de type NaZn₁₃ (au moins 70% en poids). Hormis cela, la ferrite α, qui a une T_{C} nettement supérieure aux températures visées pour cette application, n'a pas d'effet néfaste sur les propriétés magnétocaloriques.

L'invention sera mieux comprise à la lecture de la description qui suit, donnée en référence aux figures annexées suivantes :
- la figure 1 qui montre schématiquement en coupe longitudinale un exemple d'installation de fusion et de solidification sous forme de poudre de l'alliage servant à fabriquer les matériaux selon l'invention, la zone d'atomisation située sous le répartiteur étant montrée séparément à une plus grande échelle ;
- la figure 2 qui montre une observation en électrons secondaires réalisée au microscope électronique à balayage, d'un groupe de particules d'un exemple de ladite poudre (poudre A) ;
- les figures 3 et 4 qui montrent des images en électrons rétrodiffusés obtenues au microscope électronique à balayage d'un matériau de composition selon l'invention après atomisation selon le procédé décrit dans l'invention (figure 3) et après une coulée classique sous forme de lingot (figure 4) ;
- la figure 5 qui montre des diffractogrammes de rayons X d'une poudre fabriquée selon l'invention après atomisation et après diverses conditions de recuit (poudre B) ;
- la figure 6 qui montre l'évolution des proportions massiques des phases de type NaZn₁₃, ferrite α et de type LaFeSi en fonction de la température de recuit dans des poudres fabriquées selon l'invention (poudres C et D) ;
- la figure 7 qui montre les diffractogrammes de rayons X d'une poudre fabriquée selon l'invention (poudre C) après atomisation puis après recuit à 1120°C pendant diverses durées ;
- la figure 8 qui montre les diffractogrammes de rayons X d'une poudre (poudre D) fabriquée selon l'invention, avant et après hydrogénation sous différentes conditions ;
- la figure 9 qui montre l'évolution de la variation d'entropie magnétique en fonction de la température de poudres atomisées et recuites selon l'invention dans le système La-Fe-Si (poudre D), dans lesquelles on a soit substitué différentes proportions de Co à Fe (poudres C et E), soit inséré de l'hydrogène (poudre D hydrogénée totalement) dans la phase de type NaZn₁₃ ;
- la figure 10 qui montre l'évolution de la variation d'entropie magnétique en fonction de la température de poudres atomisées et recuites et totalement hydrogénées selon l'invention, dans le système La-Ce-Fe-Si-H, dans lesquelles on a substitué différentes proportions de Mn à Fe (poudres B, F, G et H)
- la figure 11 qui montre l'évolution de la température de Curie T_{C} d'une poudre atomisée, recuite et totalement hydrogénée selon l'invention (poudre D) après différents traitements de déshydrogénation ;
- la figure 12 qui montre l'évolution du paramètre de maille a (en Å) de la phase magnétocalorique d'une poudre atomisée, recuite et totalement hydrogénée (poudre D) après différents traitements de déshydrogénation ;
- la figure 13 qui montre une plaque extrudée fabriquée selon l'invention ;
- la figure 14 qui est une micrographie montrant l'incorporation de poudres magnétocaloriques dans une matrice organique.

La première étape du procédé de fabrication du matériau selon l'invention est la fusion des constituants de l'alliage destiné à former le matériau selon l'invention. Celui-ci doit avoir comme formule générale finale, une fois que tous les traitements susceptibles d'affecter sa composition ont été effectués :

La₁₋ₓ(Ce, Pr)ₓ(Fe_{1-z-v}Mn_{z}Coᵥ)_{1-y}Si_{y})_{w}Xₙ

dans lequel :
- X est un ou plusieurs éléments choisis parmi H, C, N et B ;
- x = 0 à 0,5, de préférence 0,25 à 0,5 ;
- y = 0,05 à 0,2 ;
- z = 0 à 0,15 ;
- v = 0 à 0,15 ;
- w = 12 à 16;
- n = 0 à 3,5, de préférence 1 à 3,5.

Il doit être entendu que d'autres terres rares que La, Ce et Pr peuvent éventuellement être présentes à titre d'impuretés, compte tenu du fait que les terres rares ne sont pas aisément séparables les unes des autres. On peut ainsi tolérer jusqu'à 4% en poids, mieux jusqu'à 2% en poids, de terres rares autres que La, Ce et Pr dans l'alliage final.

Des impuretés habituellement présentes dans les matières premières utilisées pour l'introduction des autres éléments sont également susceptibles d'être présentes dans l'alliage final. Au total, jusqu'à 2% en poids d'impuretés sont tolérées dans l'alliage final (hors terres rares autres que La, Ce et Pr) en plus des éléments explicitement cités dans la formule ci-dessus.

Au stade de la fin de la fusion et de l'élaboration de l'alliage à l'état liquide, le métal liquide doit déjà avoir cette composition, sauf éventuellement sur n. En effet, si dans l'alliage final n n'est pas nul, il peut cependant être égal à 0 à la fin de l'atomisation si on n'utilise ni B ni C. Si X est H et/ou N, ces éléments sont, comme on le verra, ajoutés à l'alliage solidifié par voie gazeuse, à un stade ultérieur du procédé, et peuvent être utilisés ensemble ou séparément. Il n'est pas souhaitable de les insérer dans le matériau avant la formation de la phase de type NaZn₁₃, donc avant la phase de recuit des poudres atomisées. A l'inverse, si X est B (exclusivement, ou conjointement à l'un au moins de H, N ou C), cet élément doit être présent dès la fusion des matières premières si on veut le retrouver dans le produit final. Concernant C, il peut être ajouté, au choix, sous forme solide avec les matériaux de fusion, ou par voie gazeuse dans l'alliage solidifié, ces deux procédés pouvant être utilisés conjointement. Donc, si l'alliage final doit contenir C, n peut néanmoins être nul à la fin de l'élaboration (aux impuretés près, qui peuvent comprendre notamment un peu de C et de N).

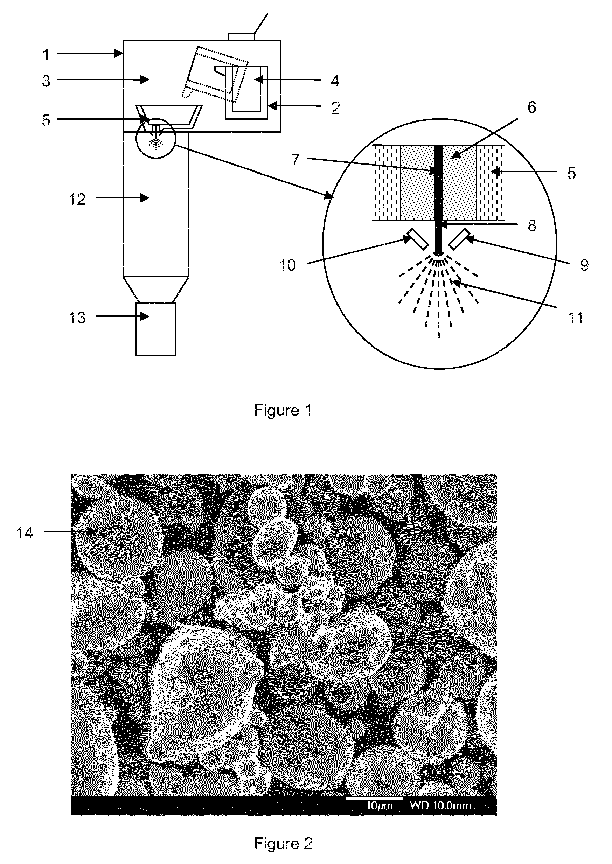

Tout le processus de fusion et de solidification est, comme représenté sur la figure 1, réalisé dans une enceinte confinée 1 dont l'atmosphère peut être maîtrisée comme on va l'expliquer.

Les matières premières massives sont fondues dans un creuset 2 chauffé, par exemple, par induction, à une température comprise entre 1400 et 1800°C, de préférence entre 1500 et 1700°C. Le minimum de 1400°C permet de s'assurer que la fusion des constituants a bien été totale. L'atmosphère environnant le bain de métal liquide est constituée par un gaz inerte, de préférence l'argon, et la pression est au moins égale à la pression atmosphérique, de préférence supérieure à celle-ci, pour limiter le départ des éléments qui, sous pression réduite, seraient susceptibles de s'évaporer, notamment les terres rares. Cette limitation de l'évaporation des éléments est également la raison de l'imposition d'une température maximale de 1800°C. En dessous de 1500°C, au moins pour les alliages à relativement haut point de fusion, il y a un risque de figeage du métal liquide dans l'orifice de la busette de coulée dont on verra qu'il a un faible diamètre. Au-delà de 1700°C, on augmente les risques de réactions entre le métal liquide et les réfractaires du creuset qui conduisent à l'introduction d'impuretés non souhaitées dans l'alliage (Al, Mg par exemple, qui diminuent les performances magnétocaloriques de l'alliage).

Les terres rares comme La, Ce et Pr sont bien connues pour être facilement oxydables, d'où l'importance de réaliser tout le processus de fusion et de solidification dans une atmosphère 3 exempte d'oxygène autant que possible.

Le métal liquide 4, une fois sa composition et sa température réglées, est versé dans un répartiteur 5. Ce répartiteur 5 a son fond équipé d'au moins une busette 6 dont l'orifice de sortie 7 a un diamètre de l'ordre de 2 à 10 mm. Le jet de métal liquide 8 sortant de l'orifice 7 de la busette 6 est atomisé par des jets d'un gaz inerte vis-à-vis du métal liquide (argon de préférence) sortant d'une ou plusieurs buses 9, 10, et qui est à une pression, par exemple, de 8 à 80 bar avant sa sortie. Typiquement le gaz d'atomisation a une teneur en oxygène de 0,02% en poids au maximum pour éviter une oxydation du métal.

Le but de cette atomisation du jet 8 en fines gouttelettes 11, et qui nécessite de régler l'installation en conséquence (conformément au savoir-faire habituel de l'homme du métier puisque le procédé de solidification par atomisation n'est pas en lui-même une nouveauté), est de former, à partir de ces gouttelettes qui se solidifient, des particules sensiblement sphériques de diamètre moyen compris entre 10 et 100 µm dans lesquelles la ségrégation des phases à l'équilibre est minimisée. Une ségrégation plus forte induirait des temps de recuit très longs et inappropriés au cas d'une production industrielle.

Une taille de particules supérieure rendrait difficile d'obtenir les sections étroites de l'élément magnétocalorique mis en forme nécessaires aux bons échanges thermiques lors de l'utilisation de l'élément. Une taille de particules inférieure ne pourrait être obtenue qu'en réduisant le débit du jet de métal liquide 8 sortant de la busette 6 jusqu'à une valeur exagérément faible qui poserait des problèmes opératoires (risques élevés de bouchage de l'orifice 7 par figeage du métal liquide 4).

Les particules solidifiées sont recueillies dans la partie inférieure refroidie 13 de la tour d'atomisation 12.

Puis on réalise le traitement thermique et la mise en forme du matériau à partir de la poudre solidifiée par atomisation.

Préférentiellement, on commence par maintenir la poudre à une température de 100 à 500°C pendant une durée d'au moins 1 min, et pouvant atteindre plusieurs heures, dans une atmosphère non oxydante. Pour cette dernière caractéristique, on peut réaliser le traitement sous vide, ou dans une atmosphère inerte ou réductrice. La fonction de ce traitement est d'éliminer les composés qui peuvent avoir été adsorbés par la poudre, notamment l'humidité, sans altérer la composition de la poudre.

Puis a lieu le traitement thermique de la poudre, et l'éventuelle hydruration ou nitruration, qui vont conférer à la poudre sa structure, de type NaZn₁₃, et éventuellement sa composition définitives avant la mise en forme du matériau.

La poudre est chauffée sous atmosphère inerte ou réductrice ou sous vide, de préférence à une vitesse de 1 à 200°C/min, jusqu'à une température de 1000 à 1200°C, de préférence 1050 à 1170°C, optimalement de 1080 à 1150°C selon la composition du matériau.

Un chauffage trop rapide risque de ne provoquer qu'une formation réduite de phase NaZn₁₃, cette formation n'étant pas instantanée. Un chauffage trop lent compromet la productivité du procédé.

La durée de ce maintien en température est à choisir par une série d'expériences de routine en fonction notamment de la quantité de poudre traitée et de l'arrangement des particules, car cette durée doit être telle que l'ensemble du matériau soit correctement traité. Elle peut aller sans inconvénients qualitatifs jusqu'à 24 h voire davantage. On peut noter que ce traitement thermique rend la poudre nettement moins sensible à l'oxydation que ne l'est la poudre d'origine. En effet, lors de ce traitement, l'ensemble des terres rares et une grande partie des métaux de transition sont alliés, et deviennent ainsi plus résistants à l'oxydation.

Puis, éventuellement, on réalise une hydruration de la poudre. A cet effet, on peut, par exemple, effectuer un traitement thermique à 100-500°C pendant 1 à 500 min dans une atmosphère hydrogénée à une pression partielle d'hydrogène de 0,1 à 10 bar. On obtient alors une structure NaZn₁₃ partiellement ou totalement hydrogénée. Des essais de routine permettent de déterminer la corrélation entre, notamment, la composition de l'alliage, la granulométrie de la poudre, et les conditions de traitement qui permettent de parvenir à un degré d'hydrogénation donné qui se traduit par la valeur du paramètre n dans la formule chimique du matériau.

Si au lieu d'hydrogène, on souhaite introduire de l'azote dans la composition du matériau, la nitruration peut s'effectuer, après que la poudre a été traitée thermiquement comme indiqué, par exemple par un maintien de la poudre pendant 1 à 1000 min à une température de 400-1100°C dans une atmosphère azotée à une pression partielle d'azote de 0,3 à 30 bar. Comme pour l'hydruration, des essais de routine permettent de déterminer la corrélation entre notamment la composition de l'alliage, la granulométrie de la poudre et les conditions de traitement qui permettent de parvenir à un degré de nitruration donné qui se traduit par la valeur du paramètre n dans la formule chimique du matériau.

L'introduction d'une partie ou de la totalité du C, si on veut en insérer dans la phase de type NaZn₁₃ de l'alliage final, peut également être réalisée à ce stade par un procédé classique de carburation ou de carbonitruration de la poudre.

Si on souhaite, à ce stade, ajouter plusieurs des éléments H, N et C, ensemble ou successivement, cela est donc possible en utilisant des techniques classiques relevant du savoir-faire habituel de l'homme du métier, et aisées à adapter par des essais de routine au cas particulier des poudres utilisées dans l'invention.

Puis on réalise la mise en forme de la poudre pour en faire un élément magnétocalorique utilisable dans une machine frigorifique.

Ainsi, selon l'invention, on disperse le matériau préparé comme précédemment dans une matrice constituée par un ou plusieurs composants organiques. Ce procédé est économique, évite d'avoir recours à un frittage coûteux en temps et en énergie, et assure une bonne stabilité chimique et mécanique à l'élément.

Il doit être entendu que le terme « matrice » tel qu'il est utilisé dans le contexte de l'invention ne laisse rien préjuger sur les proportions relatives de la poudre magnétocalorique et du ou des matériau(x) organique(s) utilisé(s). La matrice est simplement à considérer comme le matériau qui maintient la cohésion de l'élément, dont la poudre est le constituant actif.

La matrice organique, en outre, protège la poudre magnétocalorique contre la corrosion. De plus, il faut se rappeler que pendant le refroidissement de l'élément magnétocalorique de structure NaZn₁₃ ou l'application du champ magnétique audit élément, celui-ci passe de l'état paramagnétique à un état ferromagnétique, ce qui s'accompagne d'une variation de volume pouvant aller jusqu'à 1,35% environ, en fonction de la température, de la composition de la poudre et de l'intensité du champ appliqué. Cette expansion conduit à une réduction de T_{C} pendant le refroidissement, alors que pendant le passage inverse de l'état ferromagnétique à l'état paramagnétique, de telles contraintes n'existent pas et T_{C} demeure à sa valeur intrinsèque compte tenu de la composition de la poudre. Cela entraînerait dans un matériau dense un accroissement de l'hystérésis thermique et la formation de fissures, à cause de la résistance opposée à l'expansion du matériau pendant les cycles d'utilisation de l'élément. L'utilisation d'une matrice organique élastique permet d'absorber ces contraintes en évitant la fissuration de l'élément, tout en conservant les effets positifs de l'expansion des particules métalliques sur les performances magnétocaloriques.

Pour constituer la matrice, on choisit un ou plusieurs liants organiques, destinés à être mélangés à la poudre. Le choix de ces liants se fonde sur les caractéristiques suivantes
- leur capacité à accepter un grand volume de poudre magnétocalorique, puisque les propriétés magnétocaloriques d'un élément présentant un volume donné sont directement liées à la proportion en volume de poudre magnétocalorique par rapport à la matrice qu'il contient ;
- leur capacité à être mis en forme à des températures n'affectant pas le matériau magnétocalorique ;
- leurs propriétés physiques et chimiques qui doivent leur procurer une bonne résistance aux températures subies lors de la fabrication et de l'utilisation de l'élément, aux attaques chimiques par l'environnement de l'élément, et une compatibilité avec la poudre magnétocalorique, notamment du point de vue de leurs propriétés mécaniques pour que l'absorption des contraintes d'expansion de la poudre dont on a parlé soit effectivement obtenue.

Comme exemple de tels liants, on peut citer un polymère choisi parmi le polyéthylène, l'éthylène vinyle acétate, le polypropylène, le polystyrène, un polycarbonate, des résines époxy, des résines de polyuréthane..

Un mélange de deux liants ou davantage peut être utilisé.

La proportion volumique de poudre magnétocalorique dans le mélange poudre/liant est typiquement de 40 à 80%. La limite inférieure de 40% est souhaitée pour garantir un effet magnétocalorique suffisant pour un volume d'élément donné. La limite supérieure de 80% est choisie pour ne pas charger exagérément l'élément en poudre, car la matrice ne le supporterait pas assurément.

L'utilisation de particules magnétocaloriques atomisées s'avère avantageuse par rapport à des particules qui proviendraient, par exemple, d'une bande solidifiée puis broyée. En effet, elles permettent d'avoir une très bonne homogénéisation du mélange poudre/liant(s), avec une viscosité du mélange compatible avec les procédés de mise en forme par compression, injection ou extrusion, même pour des mélanges très chargés en particules magnétocaloriques. Cela est dû à la forme sensiblement sphérique des particules obtenues par atomisation, qui procurent donc une forte densité apparente au mélange en permettant de maximiser sa teneur en particules magnétocaloriques. Egalement, la forme sphérique procure de faibles frottements interparticulaires, favorables à un bon écoulement du mélange lors de la mise en forme par les procédés précédemment cités. Enfin, ces particules ont une bonne propreté superficielle, qui rend reproductibles leurs interactions avec le(s) liant(s).

Le mélange peut être mis en forme par exemple dans ou à travers un moule équipé de fentes de 0,2 à 2 mm de large, procurant aux parties actives de l'élément leur épaisseur visée, qui peut donc être localement remarquablement faible, ou une épaisseur supérieure qui pourra être réduite par des mises en forme ultérieures. Le pressage, l'injection ou l'extrusion sont réalisés entre 20 et 300°C à des pressions comprises entre 1,5 MPa et 3000 MPa. Après la sortie du mélange pressé hors du moule ou de la filière d'extrusion, si la matrice n'est pas déjà solidifiée, on réalise une solidification de la matrice par chauffage entre 20 et 300°C et/ou par projection de rayons UV, si la nature des composants organiques utilisés l'exige pour l'obtention des propriétés définitives de la matrice.

Selon l'invention, on commence par préparer une poudre d'alliage de composition :

La₁₋ₓ(Ce, Pr)ₓ((Fe_{1-z-v}Mn_{z}Coᵥ)_{1-y}Si_{y})_{w}Xₙ

dans lequel :
- X est un ou plusieurs éléments choisis parmi C, N ou B, étant entendu que si dans l'alliage final X doit être constitué partiellement ou totalement par H, cet élément (ainsi, éventuellement, qu'une partie ou la totalité de C et N) sera ajouté ultérieurement par voie gazeuse ;
- x = 0 à 0,5 (étant entendu que la présence d'autres terres rares que La, Ce et Pr à des teneurs d'impuretés n'est pas à exclure, les matières premières permettant d'introduire La, Ce et Pr dans l'alliage pouvant contenir jusqu'à 4% en poids, mieux jusqu'à 2% en poids, d'autres terres rares) ; de préférence, x = 0,25 à 0,5 ;
- y = 0,05 à 0,2 ;
- z = 0 à 0,15 ;
- v =0 à 0,15 ;
- w=12à16;
- n = 0 à 3,5.

A cet effet, selon une méthode privilégiée, on fond dans un four à induction des morceaux massifs de matières premières contenant le La, le Ce et/ou le Pr (s'il sont présents dans l'alliage à obtenir), le Fe, le Si, le Mn (s'il est présent dans l'alliage à obtenir), le Co (s'il est présent dans l'alliage à obtenir), voire aussi le B et/ou éventuellement la totalité ou une partie du C si ces éléments doivent être présents dans l'alliage à obtenir en plus ou à la place de H ou N. Lors de cette opération de fusion, il faut tenir compte du fait qu'une partie du La, du Ce et du Pr, qui sont des éléments fortement réducteurs, peut réagir avec les réfractaires du four. Il peut donc être recommandé, dans la pratique, de les introduire légèrement en excès pour compenser les pertes prévisibles que l'expérience du métallurgiste, qui connaît les conditions habituelles de fonctionnement du four utilisé, permettra de déterminer. Les autres éléments sont ajoutés sous forme pure, ou de ferroalliages, ou de ferrailles, ou d'un mélange de telles matières premières.

L'étape de solidification rapide de l'alliage liquide ainsi préparé est exécutée, pour les raisons que l'on a exposées, par atomisation au gaz d'un jet de métal, sur une installation telle que celle schématisée sur la figure 1 et que l'on a déjà décrite plus en détail. Sa conception n'est, en elle-même, pas originale. On obtient ainsi des gouttelettes sensiblement sphériques de métal liquide qui se solidifient rapidement pour former une poudre et sont recueillies dans la partie inférieure 13 de la tour d'atomisation 12.

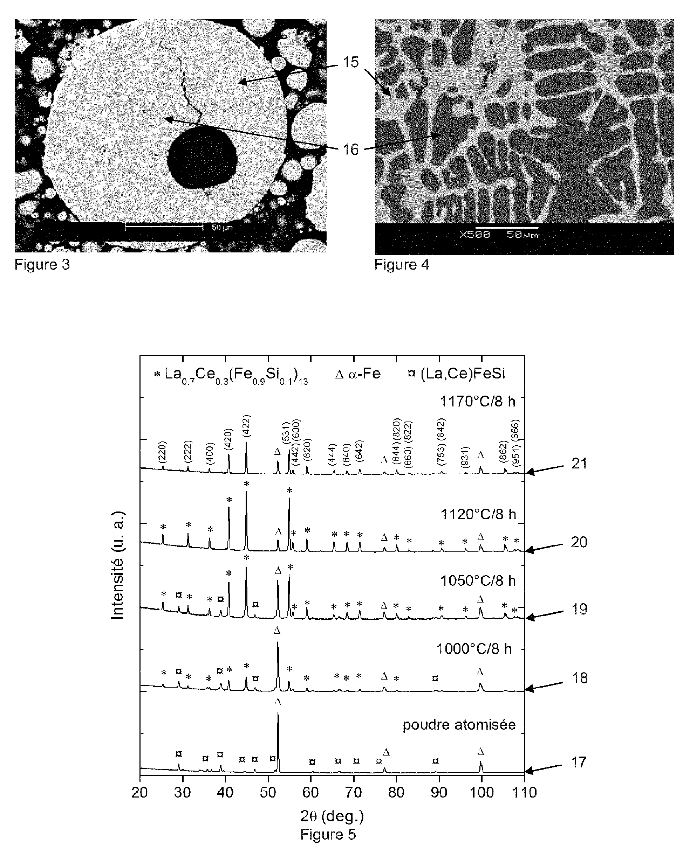

Les particules 14 visibles sur l'image en électrons secondaires de la poudre A montrée sur la figure 2 sont quasi sphériques et de diamètre moyen compris entre 10 et 100 µm. La figure 3 montre des images en électrons rétrodiffusés du matériau de composition A après atomisation et, sur la figure 4, après qu'il a été coulé dans une lingotière (selon un mode opératoire non conforme à l'invention), respectivement grossis 600 et 500 fois.

Cette poudre A, dans l'exemple représenté, a pour composition en % pondéraux :
Fe : 76,7% ; La : 15,8% ; Si : 4,67% ; Co : 2,82% C : 0,035% (impureté) ; N : 0,035% (impureté) ; O : 0,005% (impureté), soit une composition atomique globale La(Fe_{0,86}Co_{0,03}Si_{0,11})_{13,8}.

On voit sur les figures 3 et 4 que le matériau après solidification est constitué de deux phases :
- une phase claire 15 riche en La : principalement La(Fe,Co)Si (composé défini ternaire LaFeSi partiellement substitué par Co) ;
- et une phase sombre 16 : Fe(Co,Si) (ferrite α).

L'effet de l'atomisation, en termes de limitation de la ségrégation, est manifeste. On obtient des phases de dimensions moyennes d'environ 5 µm après atomisation (figure 3) alors qu'elles mesurent entre 50 et 100 µm dans un lingot obtenu selon un procédé classique (figure 4). La formation de la phase de type NaZn₁₃, à l'interface de ces deux phases, est alors grandement facilitée.

Après cette première étape d'atomisation, un traitement thermique est appliqué à la poudre afin de former la phase magnétocalorique.

Les inventeurs ont découvert que les deux phases dont il a été question se transformaient en une phase de structure de type NaZn₁₃ par une transformation de type péritectique ou péritectoïque, si la poudre est chauffée dans des conditions adéquates, par exemple pendant 5 min à 8 h entre 1080 et 1150°C. De manière générale, la température de chauffage de la poudre doit être comprise entre 900 et 1200°C, de préférence entre 1000 et 1200°C pour que la transformation puisse se produire. La durée optimale du chauffage dépend des conditions opératoires, qui gouvernent la cinétique de la transformation.

La figure 5 montre des spectres de diffraction des rayons X réalisés sur une poudre B seulement atomisée (courbe 17) puis recuite pendant une durée fixée à 8 h, à 1000°C (courbe 18), 1050°C (courbe 19), 1120°C (courbe 20), et 1170°C (courbe 21). En abscisses figure l'angle de diffraction 2θ auquel les pics apparaissent, et en ordonnées figure qualitativement l'intensité des pics de diffraction.

La composition de cette poudre B est la suivante (en pourcentages pondéraux):
Fe : 79,1% ; La : 11,1% ; Ce : 5,1% ; Si : 4,4% ; C : 0,0067% (impureté) ; N : 0,0045% (impureté) ; O : 0,03% (impureté), soit une composition atomique globale La_{0,69}Ce_{0,31}(Fe_{0,9}Si_{0,1})_{13,6}.

La poudre atomisée est majoritairement composée de la phase de type NaZn₁₃ La_{0,7}Ce_{0,3}(Fe_{0,9}Si_{0,1})₁₃ après un recuit entre 1000°C et 1170°C. Toutefois, la phase (La,Ce)FeSi persiste jusqu'à 1050°C (9% en poids d'après un affinement de type Rietveld effectué sur les diffractogrammes de rayons X, dont la méthode est décrite dans la publication H. M. Rietveld, J. Appl. Cryst. 2 (1969), 65 qui permet de calculer les proportions massiques des différentes phases dans un matériau). Il est très important d'éliminer cette phase autant que possible, car elle mobilise une part du total de terres rares introduites dans le matériau, ce qui va induire une plus faible quantité de phase de type NaZn₁₃.

Des expériences ont également été réalisées sur des poudres C et D de compositions respectives (en pourcentages pondéraux) : Fe : 76,9% ; La : 15,8% ; Si : 4,32% ; Co : 2,74% ; C : 0,045% (impureté) ; N : 0,043% (impureté) ; O : 0,006% (impureté), soit une composition atomique globale La(Fe_{0,86}Co_{0,03}Si_{0,11})_{13,8} et Fe : 80,8% ; La : 14,6% ; Si : 4,39% ; Co : 0,04% (impureté) ; C : 0,046% (impureté) ; N : 0,064% (impureté) ; O : 0,012% (impureté), soit une composition atomique globale La(Fe_{0,90}Si_{0,10})_{15,1}.

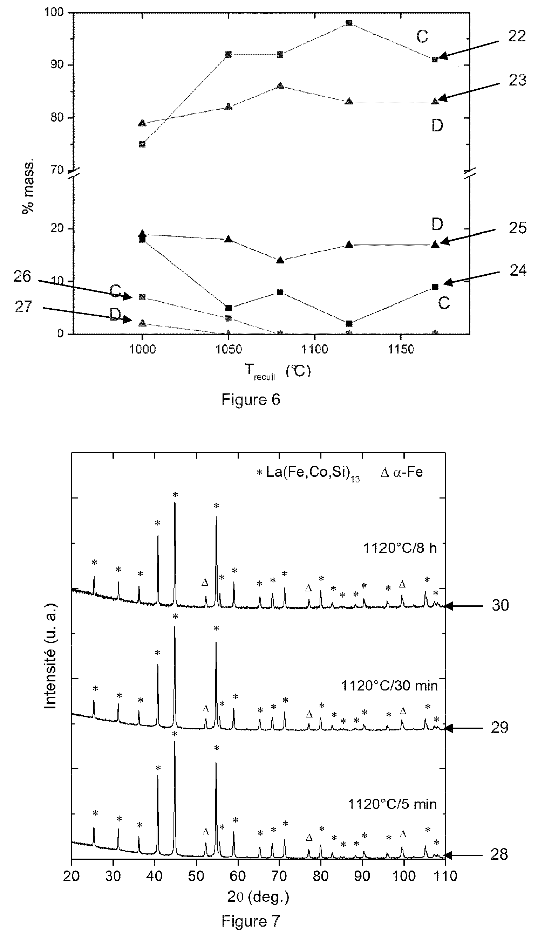

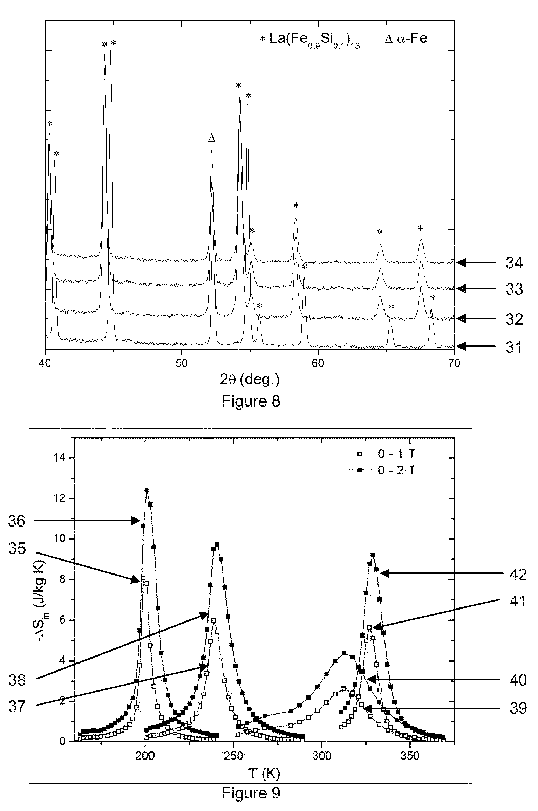

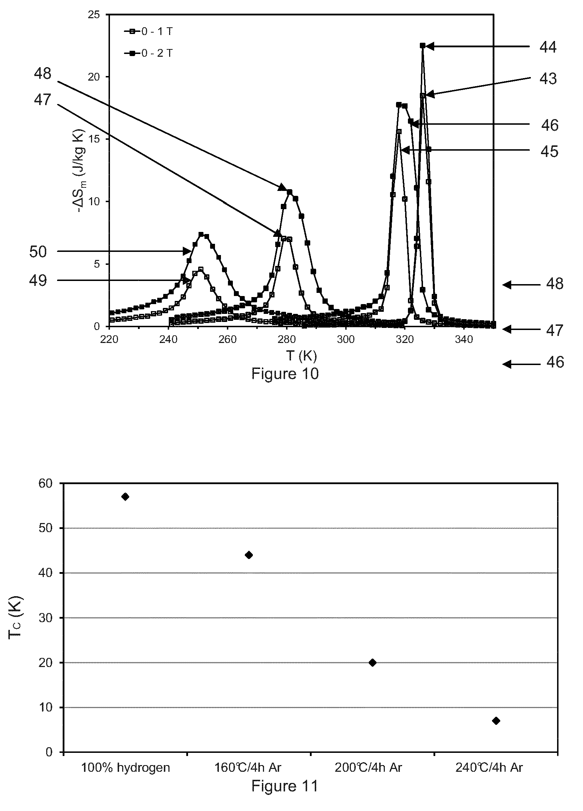

La figure 6 montre l'évolution des proportions massiques de phases de type NaZn₁₃ (courbe 22 pour la poudre C, courbe 23 pour la poudre D), ferrite α (courbe 24 pour la poudre C, courbe 25 pour la poudre D) et de type LaFeSi ou La(Fe,Co)Si (courbe 26 pour la poudre C, courbe 27 pour la poudre D) dans les poudres C et D, en fonction de la température de recuit T_{recuit}. Celle-ci est optimale pour des températures de recuit entre 1080 et 1150°C (attention : la figure indique Tc en K, quelle est la bonne unité ? même question pour les figures 9 et 10 ? effectivement, à la figure 6 il est indiqué T_{recuit} en K, il faudrait mettre °C à la place de K. Pour les figures 9 et 10, il est indiqué « T (K) » et il s'agit bien de la bonne unité). Au-delà, l'efficacité du recuit diminue du fait de l'apparition d'une phase liquide contenant les terres rares, à ces températures. Au-delà de 1200°C, cet effet est franchement trop important pour que le recuit soit suffisamment efficace, et cette situation est donc à éviter.

Les inventeurs ont également mis en évidence que la durée du recuit de ces poudres entre 5 min et 8 h a peu d'influence sur les proportions massiques des phases, pourvu que la vitesse de montée en température ne soit pas trop rapide. La figure 7 montre des spectres de diffraction des rayons X réalisés sur la poudre C atomisée et recuite à la température de 1120°C pour des durées de 5 min (courbe 28), 30 min (courbe 29) et 8 h (courbe 30). Ces recuits permettent d'éliminer totalement la phase La(Fe,Co)Si et d'obtenir des proportions de phase de type NaZn₁₃ et de ferrite Fe(Si) similaires (96% en poids de phase type NaZn₁₃ et 4% en poids de ferrite α en moyenne).

En fin de compte, dans les conditions expérimentées et quelle que soit la poudre traitée selon l'invention testée, il est possible d'obtenir une poudre contenant au moins 85% en poids de phase de type NaZn₁₃. De manière générale, on considère que dans le cadre de l'invention, au moins 70% de structure de type NaZn₁₃ doit être obtenu dans l'alliage.

Les conditions de recuit optimales telles que décrites précédemment ont été validées dans un four industriel fonctionnant avec des lots de poudre de 8 à 10 kg, avec pour critères principaux la proportion de phase de type NaZn₁₃ formée ainsi que l'homogénéité de la poudre recuite.

D'autres procédés de solidification rapide, tels que la trempe sur roue permettent de réduire fortement la durée du recuit de formation de la phase de type NaZn₁₃. Toutefois, il est nécessaire d'ajouter une étape de broyage des rubans métalliques afin de pouvoir obtenir des blocs de formes diverses après mise en forme. De plus, la forme en paillettes des particules issues de rubans métalliques broyés réduit fortement le choix des procédés de mise en forme. Ces procédés ne relèvent donc pas de l'invention.

Pour éviter l'oxydation de la poudre, le traitement thermique doit être effectué sous balayage de gaz inerte, ce qui a aussi pour avantage d'évacuer les composés indésirables adsorbés à la surface des particules et potentiellement formés à haute température. De préférence, une étape de désorption de l'humidité à 100-500°C sous gaz inerte ou sous vide est effectuée avant le traitement thermique de transformation précédemment décrit.

Les matériaux de type La(Fe₁₋ₓSiₓ)₁₃ présentent de bonnes propriétés magnétocaloriques, mais ils ont une température de Curie maximale limitée et nettement inférieure à la borne minimale de la plage de températures visée (qui est de -30°C à +50°C). Par exemple, la poudre D recuite à 1120°C, contenant une phase de type NaZn₁₃ de formule La(Fe_{0,9}Si_{0,1})₁₃, a une T_{C} de *-*73°C et une variation d'entropie magnétique -ΔSₘ de 9,3 J/kg K pour un champ magnétique de 1 T. Pour des ratios (Fe+Mn+Co+Si)/(La+Ce+Pr), Si/(Fe+Mn+Co+Si), Mn/(Fe+Mn+Co+Si) et/ou Co/(Fe+Mn+Co+Si) constants, l'introduction de Ce et/ou Pr en substitution de La, visant à améliorer les propriétés magnétocaloriques du matériau, va également diminuer leur T_{C}.

Il est donc nécessaire (cette phrase insinue que les substitutions se font en une étape supplémentaire après l'obtention de la phase La(Fe₁₋ₓSiₓ)₁₃, ça ajoute de la confusion il me semble) de mettre en oeuvre un des moyens d'augmentation de T_{C} décrits dans la présente invention.

Il est ainsi possible de procéder à la substitution de Fe par Co dans la structure de type NaZn₁₃ ou à l'insertion d'éléments légers dans la maille atomique tels que H, N, C ou B afin d'augmenter la T_{C} du matériau. Pour l'insertion de H, N et C, il est possible d'effectuer un second traitement thermique, généralement à une température de 100 à 500°C, dans une atmosphère d'hydrogène pur, d'azote pur ou d'un mélange de l'un de ces deux gaz avec de l'argon, sous une pression de 0,05 à 5 MPa pendant 1 min à 2 h.

Le carbone peut être inséré en voie solide dès la fusion, en faible quantité, et sous voie gazeuse dans de plus larges proportions lors du second traitement thermique.

Les inventeurs ont montré, comme on le voit sur la figure 8, que l'insertion d'hydrogène dans la maille de type NaZn₁₃ ne nécessite pas obligatoirement l'emploi de fortes pressions d'hydrogène mais qu'elle peut être réalisée à pression atmosphérique sous un simple flux d'hydrogène et avec un chauffage à des températures modérées. Le décalage vers les bas angles (traduisant l'insertion d'hydrogène) est identique entre la poudre D atomisée, recuite, sans hydrogène (courbe 31) et les poudres D atomisées, recuites et hydrogénées sous flux d'hydrogène à pression atmosphérique à 300°C pendant 8h (courbe 32), sous flux d'hydrogène à pression atmosphérique à 400°C pendant 1h (courbe 33) et sous une pression d'hydrogène supérieure à 5 bars (température ? inconnue mais probablement à 200°C) (courbe 34).

La figure 9 montre l'influence de la substitution de Fe par Co sur la température de Curie et la variation d'entropie magnétique des poudres atomisées et recuites à l'état non hydruré D (courbes 35 et 36), C (courbes 37 et 38), E (de composition pondérale : Fe : 69,8% ; La : 15,4% ; Si : 4,4% ; Co : 6,1% (impureté) ; N : 0,0084% (impureté) ; O : 0,043% (impureté), soit une composition atomique globale La(Fe_{0,82}Co_{0,08}Si_{0,10})_{13,5},) (courbes 39 et 40) et de la poudre D atomisée, recuite et hydrogénée (courbes 41 et 42). Les entropies magnétiques ont été calculées, à 1 T et 2 T, à partir de mesures de M(H) dans un champ magnétique variant de 0 à 2 T. L'augmentation de T_{C} (+17,3°C/Co %mass.) observée s'accompagne d'une baisse de |ΔSₘ| (-1,1 J/kg K/Co %mass.).

A l'inverse, l'insertion de H réalisée par chauffage du matériau à pression atmosphérique, sous flux de H₂ à 300°C pendant 8 h dégradé (je maintiens mon « dégradé » car l'objet est après le verbe) très peu les propriétés magnétocaloriques et permet d'augmenter très fortement T_{C} (δ|ΔSₘ| = -3,7 J/kg K pour δ T_{C} = +130 K, pour 0,2%mass. H₂ à hydruration totale). Le choix de l'insertion d'hydrogène dans la maille apparaît alors clairement comme le moyen à privilégier pour augmenter la T_{C} des matériaux sur une forte gamme de températures. La substitution de Fe par Co sera, éventuellement, un moyen d'ajuster Tc, sur de faibles plages de température, afin de ne pas trop dégrader les propriétés.

La figure 10 montre l'influence de la substitution de Fe par Mn sur la température de Curie et la variation d'entropie magnétique des poudres B (courbes 43, 44), F (de composition pondérale : Fe : 78,4% ; La : 11,6% ; Ce : 5,2% ; Si : 4,24% ; Mn : 0,364% ; C : 0,0071 % (impureté) ; N : 0,0083% (impureté) ; O : 0,018% (impureté), soit une composition atomique globale La_{0,69}Ce_{0,31}(Fe_{0,31}(Fe_{0,899}Mn_{0,004}Si_{0,097})_{12,9}) (courbes 45, 46), G (de composition pondérale : Fe : 75,6% ; La : 12,0% ; Ce : 5,3% ; Si : 4,48% ; Mn : 1,69% ; C : 0,087% (impureté) ; N : 0,0054% (impureté) ; O : 0,037% (impureté), soit une composition atomique globale La_{0,7}Ce_{0,3}(Fe_{0,877}Mn_{0,020}Si_{0,103})_{12,4}) (courbes 47, 48) et H (de composition pondérale : Fe : 74,1% ; La : 12,1% ; Ce : 5,3% ; Si : 5,35% ; Mn : 2,35% ; C : 0,09% (impureté) ; N : 0,0035% (impureté) ; O : 0,022% (impureté), soit une composition atomique globale La_{0,7}Ce_{0,3}(Fe_{0,851}Mn_{0,027}Si_{0,122})_{12,4}) (courbes 49, 50) atomisées, recuites et hydrogénées au maximum. Les entropies magnétiques ont été calculées, à 1 T et 2 T, à partir de mesures de M(H) dans un champ magnétique variant de 0 à 2 T. On observe une diminution de T_{C} (-28,8 K/Mn %mass.) plus rapide que ne l'était son augmentation avec Co et une diminution de |ΔSₘ| (-7,6 J/kg K/Mn %mass.) également plus élevée. L'usage de la substitution de Mn à Fe pour diminuer la T_{C} ne devra également servir qu'à un ajustement sur de faibles plages de température.

Il est important de noter que les matériaux décrits ci-dessus n'ont pas été synthétisés dans des conditions de laboratoire (quelques dizaines de grammes) mais dans des conditions industrielles, sur des installations permettant de réaliser l'atomisation de charges métalliques de 35 kg.

Les deux familles de matériaux La(Fe,Co,Si)₁₃ (ou La(Fe,Co,Si)₁₃Hₓ) et (La,Ce)(Fe,Mn,Si)₁₃Hₓ (et Pr? malheureusement, nous n'avons rien testé avec Pr) permettent de couvrir la gamme de températures visée, de 240 à 320 K (-30 à 50°C). La comparaison des figures 9 et 10 montre également que, bien qu'elle se dégrade plus rapidement avec la teneur en Mn, la |ΔSₘ| des matériaux (La,Ce)(Fe,Mn,Si)₁₃Hₘₐₓ est supérieure à celle des matériaux La(Fe,Co,Si)₁₃, dans la gamme de températures visée. Si la T_{c} des matériaux doit être diminuée au-delà d'une certaine limite acceptable en Mn dans le matériau, il est possible de diminuer la teneur en hydrogène par une étape de déshydrogénation partielle du matériau.

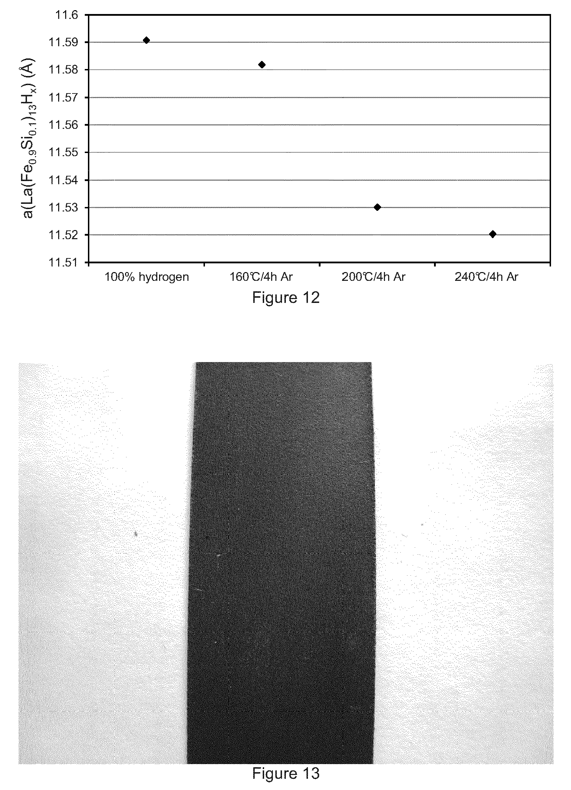

La figure 11 (attention : T_{c} y est en K oui cette fois ci c'est bon, les valeurs sont bonnes) montre la diminution contrôlée de T_{c} de la poudre D atomisée, recuite et hydrogénée totalement sur une gamme de température d'environ 60°C (entre 0 et 60°C). Les traitements sous flux d'Ar, à température modérée (entre 150 et 250°C) permettent un réglage sélectif de la T_{c} des poudres en limitant la dégradation de |ΔSₘ| comme le montre la comparaison entre les courbes 37, 38 et 41, 42 de la figure 9, représentant la poudre C atomisée et recuite, avant et après hydrogénation maximale. La courbe de la figure 12, associée à la courbe 11 montre, pour les mêmes poudres, traitées dans les conditions indiquées, la variation du paramètre de maille a de la phase de type NaZn₁₃ La(Fe_{0,9}Si_{0,1})₁₃Hₓ. Chacune des poudres après traitement ne comporte bien qu'une seule phase indexable avec les paramètres de la phase de type NaZn₁₃ ; ceci montre que la déshydrogénation partielle des poudres sous flux d'Ar entre 150 et 250°C est bien homogène dans le lot de poudre traité.

Une fois la composition du matériau ajustée selon la T_{c} visée (étant entendu que la composition se situe dans une gamme où |ΔSₘ| traduit de bonnes performances magnétocaloriques), on réalise la mise en forme de l'élément à partir de la poudre traitée thermiquement (dite « poudre activée »), renfermant au moins 70% en poids de la phase de structure de type NaZn₁₃, pour la conformer en une pièce destinée à être utilisée comme échangeur thermique.

La poudre activée est, à cet effet, mélangée avec un ou plusieurs liants organiques destinés à former la matrice et choisis de préférence, comme on l'a expliqué plus haut, à raison d'une proportion de poudre activée comprise entre 40 et 80% en volume du matériau. Puis le mélange est broyé ou mis en granules. Puis on exécute la mise en forme du mélange par l'un des procédés précédemment cités.

Dans le cas d'une mise en forme effectuée par pressage ou injection dans un moule, ou par extrusion à travers une filière, elle est effectuée de préférence entre 20 et 300°C selon, notamment, la nature de la matrice, et peut être suivie, après démoulage, d'une cuisson à une température adaptée à la nature de la matrice, par exemple de 20 à 300°C et/ou d'une irradiation aux UV.

Si on souhaite élargir la plage de températures efficaces de l'élément magnétocalorique, cela peut être réalisé en mélangeant deux poudres différentes ou davantage, ayant chacune une Tc différente, cette différence pouvant aller jusqu'à 80°C entre la T_{c} la plus haute et la T_{c} la plus basse.

Dans un premier exemple, on a fondu 35 kg d'un alliage selon l'invention dans un four à induction 2 enfermé dans une enceinte étanche 1 inertée à l'argon avec une légère surpression (jusqu'à 0,5 bar) par rapport à la pression atmosphérique. On visait à obtenir un alliage de composition La_{0,75}Ce_{0,25}(Fe_{0,9}Si_{0,1})₁₃. A cet effet, on a utilisé une charge comportant 13,6% en poids de La et 4,6% de Ce (soit 10% de La et Ce de plus que ce qui aurait été théoriquement nécessaire, de manière à compenser les pertes lors de l'élaboration), 77,5% en poids de Fe, et 4,3% en poids de Si. Le métal liquide 4 a ensuite été versé dans un répartiteur 5 également enfermé dans l'enceinte 1, et s'écoulait hors du répartiteur 5 à travers un orifice 7 d'une busette 6 de diamètre 6 mm. A sa sortie de l'orifice, le jet de métal liquide 8 était atomisé par de l'argon sortant de busettes 9, 10 à une pression de 50 bar avant sa sortie. On a ainsi obtenu une poudre magnétocalorique d'alliage présentant les caractéristiques suivantes :
- composition en % pondéraux : Fe : 78,1% ; La : 12,2% ; Ce : 4,6% ; Si : 4,3% ; de composition atomique globale La_{0,73}Ce_{0,27}(Fe_{0,9}Si_{0,1})_{12,9}
- diamètre des particules D50 : 75 µm.

Cette poudre a ensuite été recuite à 1120°C, pendant 8h sous une atmosphère inerte. A l'issue de ce traitement, la poudre présentait environ 88 mass.% de phase magnétocalorique (d'après des mesures de diffraction des rayons X), une T_{c} de 168 K et une valeur de |ΔSₘ| d'environ 18 J/kg K pour une variation de champ magnétique de 1 T. Cette poudre a ensuite été hydrogénée sous flux d'hydrogène à environ 400°C pour atteindre une T_{c} de 330 K (57°C) pour un |ΔSₘ| d'environ 14,8 J/kg K pour une variation de champ magnétique de 1 T. Elle a enfin été déshydrogénée de façon contrôlée afin de former plusieurs lots homogènes de T_{c} égales à 27, 18 et 15°C. Pour finir, la poudre à 15°C a été mélangée avec du polyéthylène basse densité (LDPE) puis granulée. Les granules obtenues par ce procédé présentent une T_{c} finale de 15°C et un |ΔSₘ| d'environ 5,3 J/kg K.

Dans un autre exemple complet de réalisation de pièces consolidées, une poudre (La,Ce)(Fe,Mn,Si)₁₃Hₓ (poudre G) atomisée et traitée thermiquement selon le procédé de l'invention, a été mise en forme par extrusion d'une charge métallique selon le processus ci-dessous. Cette poudre présentait les caractéristiques suivantes :
- composition atomique globale : La_{0,7}Ce_{0,3}(Fe_{0,877}Mn_{0,020}Si_{0,103})_{12,4}
- proportion de phase magnétocalorique après recuit et hydrogénation : 94 mass.%
- diamètre des particules D50 : 38,4 µm ;
- densité tapée : 3,65 g/cm³

Dans un mélangeur à pales de type Gericke, on introduit un polyéthylène LDPE sous forme de poudre et la poudre métallique. Le polyéthylène choisi présente les caractéristiques suivantes : indice de fluidité MFR = 22 dg/min (190°C / 2,16 kg), densité = 919 kg/m³. Le mélange est réalisé à température ambiante, avec une vitesse de rotation de 25 tr/min pendant 10 min. Les proportions du mélange sont les suivantes : polyéthylène 36 %vol., poudre métallique 64 %vol. pour un poids total mélangé de 5 kg.

Dans une extrudeuse bi-vis co-rotatives de marque TSA (diamètre vis 20 mm, longueur 1000 mm), chauffée jusqu'à 160°C en tête d'extrudeuse, on introduit le mélange précédemment obtenu. La vitesse de rotation des vis a été fixée à 40 tr/min. La poudre et le polymère se mélangent intimement sous l'action combinée de la chaleur et du cisaillement imposé par les vis co-rotatives. A la sortie, le mélange est extrudé à travers une filière cylindrique pour obtenir un jonc. On obtient avec ce réglage un débit constant de 4,5 kg/h de matière en sortie de l'extrudeuse.

Les joncs obtenus sont broyés dans un broyeur mécanique équipé d'une grille de 2 mm. Les granulés ainsi obtenus peuvent être transformés dans une extrudeuse monovis standard.

Dans une seconde étape, la matière est mise sous forme de lame mince. Pour ce faire, on utilise une ligne d'extrusion constituée d'une extrudeuse monovis de type Greiner (diamètre de vis 30 mm, longueur 762 mm), équipée à sa sortie d'une filière de forme. Accouplé à la filière, se trouvent un conformateur qui garantit le maintien de la forme puis un bac en immersion sous vide pour le refroidissement. Enfin, en sortie du bac à immersion on utilise un outillage de maintien sécheur, puis on tire le profil à l'aide d'une tireuse.

L'extrudeuse monovis a été réglée selon les paramètres suivants : profil de chauffe avec une température en tête d'extrudeuse de 165°C, vitesse de rotation fixée à 15 tr/min et température du conformateur de 80°C. Avec ce réglage, on a obtient une vitesse de sortie du profilé de 4 m/min.

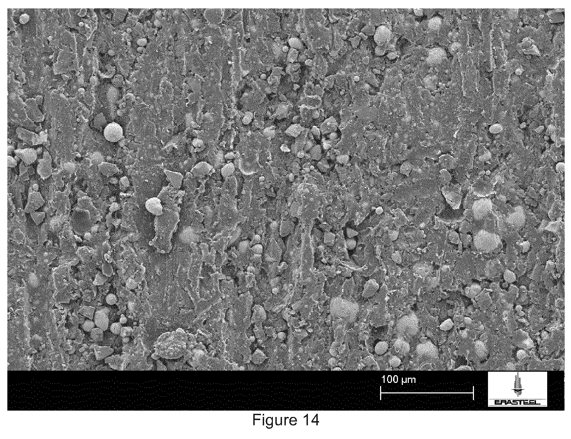

Le produit final obtenu, présenté sur les figures 13 et 14, est une bande d'épaisseur 0,6 mm et de grande longueur. Elle est constituée de 64% en volume de poudre magnétocalorique dispersée dans une matrice polymère.

## Revendications

1. Procédé de fabrication d'un élément magnétocalorique, **caractérisé en ce qu'**il comporte les étapes suivantes :
- on prépare au moins une poudre d'un alliage magnétocalorique de composition :
La₁₋ₓ(Ce, Pr)ₓ((Fe_{1-z-v}Mn_{z}Coᵥ)_{1-y}Si_{y})_{w}Xₙ
dans lequel :
- X est un ou plusieurs éléments choisis parmi H, C, N et B ;
- x = 0 à 0,5, de préférence 0,25 à 0,5;
- y = 0,05 à 0,2;
- z = 0 à 0,15;
- v = 0 à 0,15;
- w = 12 à 16;
- n = 0 à 3,5, de préférence 1 à 3,5 ;
le reste étant des impuretés résultant de l'élaboration, avec une teneur maximale de 4% en poids, de préférence une teneur maximale de 2% en poids, en terres rares autres que La, Ce et Pr, et une teneur maximale de 2% en poids, pour les autres impuretés, la préparation de la poudre comportant elle-même les étapes suivantes :
- on élabore un alliage liquide (4) dans un creuset (2) ;
- on solidifie ledit alliage liquide (4) sous forme de poudre de particules (14) sensiblement sphériques de diamètre moyen compris entre 10 et 100 µm par atomisation d'un jet (8) dudit alliage liquide (4) au moyen d'un gaz inerte ;
- optionnellement, on traite thermiquement ladite poudre (14) à une température comprise entre 100 et 500°C pendant au moins 1 min dans une atmosphère non-oxydante, pour éliminer les composés adsorbés par la poudre ;
- on traite thermiquement ladite poudre (14) pour lui conférer à au moins 70% en poids une phase de structure de type NaZn₁₃ par chauffage sous atmosphère inerte ou réductrice ou sous vide jusqu'à une température de 900 à 1200°C, de préférence de 1000 à 1200°C ;
- optionnellement on réalise un traitement d'hydruration et/ou de nitruration et/ou de carburation et/ou carbonitruration pour conférer à n sa valeur définitive ;
- on disperse ladite poudre (14) dans une matrice constituée par un ou plusieurs liants organiques pour former un mélange comportant de 40 à 80% en volume de poudre ;
- on met en forme ledit mélange ;
- et éventuellement on réalise une solidification de la matrice.

2. Procédé selon la revendication 1, **caractérisé en ce que** le traitement thermique de la poudre (14) lui conférant une structure du type NaZn₁₃ comporte une étape de chauffage de la poudre (14) à une vitesse de 1 à 200°C/min jusqu'à la température de traitement.

3. Procédé selon les revendications 1 ou 2, **caractérisé en ce que** la solidification de la matrice s'effectue par chauffage entre 20 et 300°C et/ou par projection de rayons UV.

4. Procédé selon l'une des revendications 1 à 3, **caractérisé en ce que**, avant la mise en forme, le mélange formé par la poudre (14) et les liants est broyé et mis en granules.

5. Procédé selon l'une des revendications 1 à 5, **caractérisé en ce qu'**on mélange à la matrice au moins deux poudres (14) différentes, dont les températures de Curie la plus haute et la plus basse diffèrent de 80°C au maximum.

6. Procédé selon l'une des revendications 1 à 6, **caractérisé en ce que** le liant comporte au moins un polymère choisi parmi le polyéthylène, l'éthylène vinyle acétate, le polypropylène, le polystyrène, un polycarbonate, des résines époxy, des résines de polyuréthane.

7. Procédé selon l'une des revendications 1 à 6, **caractérisé en ce que** la mise en forme du mélange est réalisée par transformation sous une pression de 1,5 à 3000 MPa à une température de 20 à 300°C.

8. Procédé selon l'une des revendications 1 à 7, **caractérisé en ce que** la mise en forme du mélange est réalisée par compression dans un moule.

9. Procédé selon l'une des revendications 1 à 7, **caractérisé en ce que** la mise en forme du mélange est réalisée par injection dans un moule.

10. Procédé selon l'une des revendications 1 à 7, **caractérisé en ce que** la mise en forme du mélange est réalisée par extrusion.

## Patentansprüche

1. Ein Verfahren zur Herstellung eines magnetokalorischen Bauelements, **gekennzeichnet dadurch, dass** es die folgenden Schritte umfasst:
- Vorbereiten mindestens eines magnetokalorischen Legierungspulvers der Zusammensetzung:
La₁₋ₓ(Ce, Pr)ₓ((Fe_{1-z-v}Mn_{z}Coᵥ)_{1-y}Si_{y})_{w}Xₙ
wobei:
- X ein oder mehrere Elemente ausgewählt H, C, N und B ist;
- x = 0 bis 0,5, vorzugsweise 0,25 bis 0,5;
- y = 0,05 bis 0,2;
- z = 0 bis 0,15;
- v = 0 bis 0,15;
- w = 12 bis 16;
- n = 0 bis 3,5, vorzugsweise 1 bis 3,5;
wobei der Rest Verunreinigungen sind, die aus der Verarbeitung resultieren, mit einem Maximalgehalt von 4 Gew.-%, vorzugsweise einem Maximalgehalt von 2 Gew.-%, an anderen seltenen Erden als La, Ce und Pr, und einem Maximalgehalt von 2 Gew.-% an anderen Verunreinigungen, wobei die Herstellung des Pulvers selbst die folgenden Schritte umfasst:
- Verarbeiten einer flüssigen Legierung (4) in einem Schmelztiegel (2);
- Aushärten der flüssigen Legierung (4) zu pulverförmigen, im wesentlichen sphärischen Partikeln (14) mit einem durchschnittlichen Durchmesser zwischen 10 und 100 µm, durch Atomisieren des Gusses (8) der flüssigen Legierung (4) mittels eines inerten Gases;
- wahlweise thermisches Behandeln des Pulvers (14) bei einer Temperatur zwischen 100 und 500 °C über mindestens 1 min hinweg in einer nichtoxidierenden Atmosphäre, um von dem Pulver absorbierte Verbindungen zu beseitigen;
- thermisches Behandeln des Pulvers (14), um dieses mit mindestens 70 Gew.-% einer Phase mit einer Struktur vom Typ NaZn₁₃ zu erhalten, durch Heizen unter einer inerten oder reduzierenden Atmosphäre oder unter Vakuum bis auf eine Temperatur von 900 bis 1200 °C, vorzugsweise von 1000 bis 1200 °C;
- wahlweise Durchführen einer Hydrierungs- und/oder Nitrierungs- und/oder Carburierungs- und/oder Nitrocarburierungsbehandlung, um n seinen endgültigen Wert zu verleihen;
- Dispergieren des Pulvers (14) in eine Matrix mit einem oder mehreren organischen Bindemitteln, um eine Mischung enthaltend 40 bis 80 Volumen-% Pulver zu bilden;
- Aufbereiten der Mischung;
- wahlweise Verfestigen der Matrix.

2. Das Verfahren gemäß Anspruch 1, **dadurch gekennzeichnet, dass** die thermische Behandlung des Pulvers (14), das diesem eine Struktur des Typs NaZn₁₃ verleiht, einen Schritt des Heizens des Pulvers (14) mit einer Geschwindigkeit von 1 bis 200 °C/min bis auf die Temperatur der Behandlung umfasst.

3. Das Verfahren gemäß den Ansprüchen 1 oder 2, **dadurch gekennzeichnet, dass** die Verfestigung der Matrix durch Erhitzen auf zwischen 20 und 300 °C und/oder durch Bestrahlen mit UV-Strahlen erfolgt.

4. Das Verfahren gemäß einem der Ansprüche 1 bis 3, **dadurch gekennzeichnet, dass** die durch das Pulver (14) und die Bindemittel gebildete Mischung vor dem Formen zerstoßen und granuliert wird.

5. Das Verfahren gemäß einem der Ansprüche 1 bis 5, **dadurch gekennzeichnet, dass** die Matrix mit mindestens zwei verschiedenen Pulvern (14) gemischt wird, deren höchste und niedrigste Curie-Temperatur sich höchstens um 80 °C unterscheiden.

6. Das Verfahren gemäß einem der Ansprüche 1 bis 6, **dadurch gekennzeichnet, dass** das Bindemittel mindestens ein Polymer ausgewählt aus Polyethylen, Ethylenvinylacetat, Polypropylen, Polystyrol, Polycarbonat, Epoxidharzen, Polyurethanharzen umfasst.

7. Das Verfahren gemäß einem der Ansprüche 1 bis 6, **dadurch gekennzeichnet, dass** das Formen der Mischung durch Verarbeitung unter einem Druck von 1,5 bis 3000 MPa bei einer Temperatur von 20 bis 300 °C erfolgt.

8. Das Verfahren gemäß einem der Ansprüche 1 bis 7, **dadurch gekennzeichnet, dass** das Formen der Mischung durch Kompression in einer Pressform erfolgt.

9. Das Verfahren gemäß einem der Ansprüche 1 bis 7, **dadurch gekennzeichnet, dass** das Formen der Mischung durch Einspritzen in eine Gussform erfolgt.

10. Das Verfahren gemäß einem der Ansprüche 1 bis 7, **dadurch gekennzeichnet, dass** das Formen der Mischung durch Extrusion erfolgt.

## Claims

1. A method for manufacturing a magnetocaloric element, **characterized in that** it includes the following steps:
- at least one powder of a magnetocaloric alloy with composition:
La₁₋ₓ(Ce, Pr)ₓ((Fe_{1-z-v}Mn_{z}Coᵥ)_{1-y}Si_{y})_{w}Xₙ
is prepared, wherein:
- X is one or several elements selected from H, C, N and B;
- x = 0 to 0.5, preferably 0.25 to 0.5;
- y = 0.05 to 0.2;
- z = 0 to 0.15;
- v = 0 to 0.15;
- w = 12 to 16;
- n = 0 to 3.5, preferably 1 to 3.5;
the remainder being impurities resulting from the elaboration, with a maximum content of 4% by weight, preferably a maximum content of 2% by weight, of rare earths other than La, Ce and Pr, and a maximum content of 2% by weight, for the other impurities, the preparation of the powder itself including the following steps:
- a liquid alloy (4) is elaborated in a crucible (2);
- said liquid alloy (4) is solidified in the form of a powder of substantially spherical particles (14) with an average diameter comprised between 10 and 100 µm by atomization of a jet (8) of said liquid alloy (4) by means of an inert gas;
- optionally, said powder (14) is heat-treated at a temperature comprised between 100 and 500°C for at least 1 min in a non-oxidizing atmosphere for removing the compounds adsorbed by the powder;
- said powder (14) is heat-treated in order to give it, at least at 70% by weight, a phase with a structure of the NaZn₁₃ type by heating under an inert or reducing atmosphere or *in vacuo* up to a temperature from 900 to 1,200°C, preferably from 1,000 to 1,200°C;
- optionally, a hydridation and/or nitridation and/or carbidation and/or carbonitridation treatment is carried out for giving n its definitive value;
- said powder (14) is dispersed in a matrix formed by one or several organic binders for forming a mixture including 40 to 80% by volume of powder;
- said mixture is shaped;
- and optionally solidification of the matrix is achieved.

2. The method according to claim 1, **characterized in that** the heat-treatment of the powder (14) giving it a structure of the NaZn₁₃ type includes a step for heating the powder (14) at a rate of 1 to 200°C/min up to the treatment temperature.

3. The method according to claims 1 or 2, **characterized in that** the solidification of the matrix is carried out by heating between 20 and 300°C and/or by projecting UV radiations.

4. The method according to one of claims 1 to 3, **characterized in that**, before shaping, the mixture formed by the powder (14) and the binders is milled and granulated.

5. The method according to one of claims 1 to 5, **characterized in that** at least two different powders (14) for which the higher and lower Curie temperatures differ by at most 80°C are mixed with the matrix.

6. The method according to one of claims 1 to 6, **characterized in that** the binder includes at least one polymer selected from polyethylene, ethylene vinyl acetate, polypropylene, polystyrene, polycarbonate, epoxy resins, polyurethane resins.

7. The method according to one of claims 1 to 6, **characterized in that** the shaping of the mixture is achieved by transformation under a pressure from 1.5 to 3,000 MPa at a temperature from 20 to 300°C.

8. The method according to one of claims 1 to 7, **characterized in that** the shaping of the mixture is achieved by compression in a mold.

9. The method according to one of claims 1 to 7, **characterized in that** the shaping of the mixture is achieved by injection in a mold.

10. The method according to one of claims 1 to 7, **characterized in that** the shaping of the mixture is achieved by extrusion.
